# EUROPÄISCHE PATENTSCHRIFT

(11) **EP 1 467 187 B1**
(45) Veröffentlichungstag und Bekanntmachung des Hinweises auf die Patenterteilung: **17.09.2008**
(21) Anmeldenummer: 04003235.1
(22) Anmeldetag: 13.02.2004
(51) Int. Cl.: G01D 11/24, G01D 5/347, G01D 5/26

(54) **Positionsmesseinrichtung**
Position measuring device
Système de mesure de position

(30) Priorität: 11.04.2003 DE 10316870
(43) Veröffentlichungstag der Anmeldung: 13.10.2004
(73) Patentinhaber: Dr. Johannes Heidenhain GmbH, 83292 Traunreut (DE)
(72) Erfinder: Harrer, Helmut, 84478 Waldkraiburg (DE)

(56) Entgegenhaltungen:
- DE-A1- 4 241 020
- DE-A1- 19 543 372
- DE-C1- 19 523 795

## Beschreibung

Die Erfindung betrifft eine Positionsmesseinnchtung gemaß dem Oberbegriff des Anspruchs 1.

Derartige Positionsmesseinrichtungen dienen zur Messung von Wegen oder Winkeln eines bewegten Bauteils. Zur Erfassung der Bewegung des Bauteils ist eine Detektoreinrichtung in einem Gehäuse geschützt untergebracht. Über ein Kabel werden die positionsabhängigen elektrischen Messsignale vom Innenraum des Gehäuses nach außen geführt und an eine Folgeelektronik zur Messwertverarbeitung weitergeleitet.

Aus der DE 195 43 372 A1 ist eine derartige Positionsmesseinrichtung in Form einer Winkelmesseinrichtung bekannt. Um das Schirmgeflecht des Kabels ist eine Hülse gecrimpt, welche in eine Passung eingreift und dadurch eine Zugentlastung für das Kabel bildet. Die Hülse und die Passung werden von einem Deckel abgedeckt.

Nachteilig bei dieser Vorrichtung ist das Erfordernis einer Hülse um das Schirmgeflecht sowie die mangelnde Dichtheit der Kabeldurchführung.

Der Erfindung liegt die Aufgabe zugrunde, eine Positionsmesseinrichtung anzugeben, bei der ein geschirmtes elektrisches Kabel besonders einfach an einem Gehäuse der Positionsmesseinnchtung festgelegt ist

Diese Aufgabe wird erfindungsgemäß durch die Positionsmesseinrichtung mit den Merkmalen des Patentanspruchs 1 gelöst.

Die Öffnung der Wandung des Gehäuses, durch welche das geschirmte Kabel hindurchgeführt ist, ist durch eine Verformung der Wandung bzw. eine Verquetschung verringert, wodurch das Kabel in der Öffnung festgelegt ist.

Nach einer bevorzugten Ausführungsform ist das Schirmgeflecht über den Mantel des Kabels zurückgeschlagen und die Verformung weist einen ersten Abschnitt auf, bei dem zwischen der verformten Wandung des Gehäuses und dem Mantel kein Schirmgeflecht vorhanden ist und die Verformung weist einen zweiten Abschnitt auf, bei dem die verformte Wandung des Gehäuses das umgeschlagene Schirmgeflecht kontaktiert.

Dies hat den Vorteil, dass durch den ersten Abschnitt die Dichtheit der Kabeldurchführung sichergestellt ist und durch den zweiten Abschnitt die Schirmanbindung an das elektrisch leitende Gehäuse gewährleistet ist.

Weitere vorteilhafte Ausgestaltungen sind in den abhängigen Ansprüchen angegeben.

Mit der Erfindung ist eine einfache und platzsparende Fixierung und Schirmanbindung des Kabels am Gehäuse der Positionsmesseinrichtung möglich.

Anhand der Zeichnungen wird die Erfindung anhand von Ausführungsbeispielen näher erläutert.

Es zeigen:
- Figur 1: eine Winkelmesseinrichtung im Querschnitt längs einer Wellenachse der Winkelmesseinrichtung;
- Figur 2: eine Querschnittsdarstellung der Winkelmesseinrichtung im Bereich der Kabeldurchführung;
- Figur 3: einen Schnitt I-I des Gehäuses der Winkelmesseinrichtung nach Figur 2;
- Figur 4: einen Schnitt II-II des Gehäuses nach Figur 3;
- Figur 5: einen Schnitt des Gehäuses einer zweiten Winkelmesseinrichtung und
- Figur 6: einen Schnitt des Gehäuses einer dritten Winkelmesseinrichtung.

Die in den Figuren dargestellten und beispielhaft beschriebenen Positionsmesseinrichtungen sind Winkelmesseinrichtungen. Diese Winkelmesseinrichtungen weisen eine Welle 1 zum Anschluss an einen zu messenden Körper auf, dessen Winkellage zu messen ist. Die Welle 1 ist in einem Grundkörper 2 - auch Stator oder Flansch genannt - drehbar gelagert. Zur Winkelmessung ist die Welle 1 beispielsweise mit einer Motorwelle und der Grundkörper 2 mit dem relativ dazu stationären Motorgehäuse verbunden

An der Welle 1 ist eine Codescheibe 3 mit einer inkrementalen und/oder absoluten Codierung drehstarr angebracht, die lichtelektrisch, magnetisch, kapazitiv oder induktiv abtastbar ist. Im gezeigten Beispiel wird die Codescheibe 3 lichtelektrisch abgetastet. Hierzu dient eine Lichtquelle 4, die ein Lichtbündel abstrahlt, das von der Codescheibe 3 positionsabhängig moduliert wird. Das modulierte Licht gelangt auf eine Detektoreinrichtung 5, welche auf einer Leiterplatte 6 angeordnet ist Auf der Leiterplatte 6 befindet sich weiterhin der stationäre Teil 7 1 einer Steckverbindung 7 Das korrespondierende Teil 7.2 dieser Steckverbindung 7 ist an einem nach außen führenden Kabel 8 befestigt.

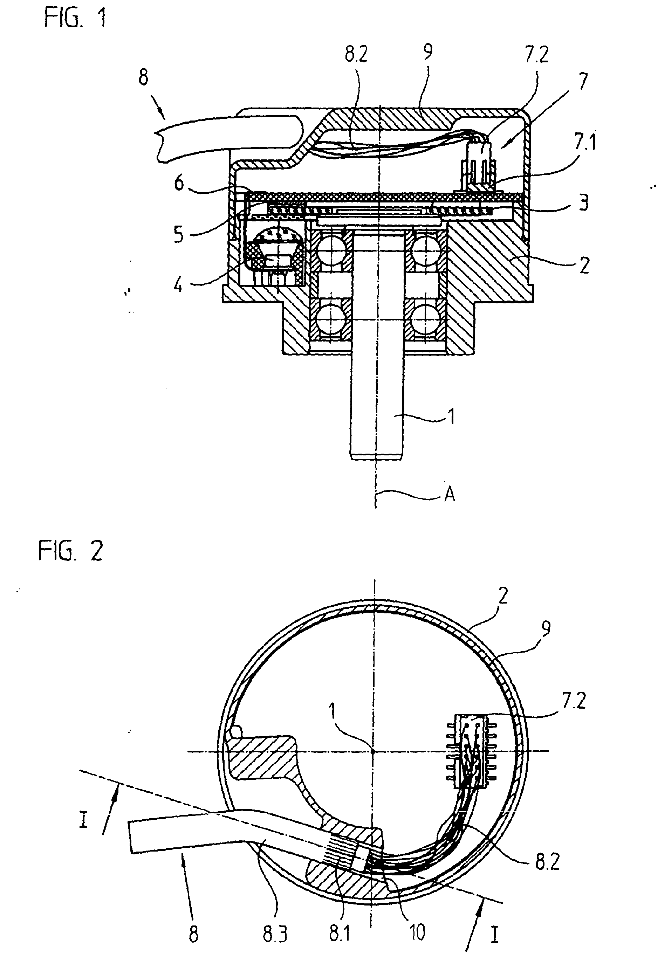

Zum Schutz der Detektoreinrichtung 5 dient ein zylinderförmiges bzw. topfförmiges stirnseitig geschlossenes Gehäuse 9, welches über den Umfang am Grundkörper 2 befestigt ist. Der Schutz vor elektromagnetischen Störstrahlungen ist gewährleistet, indem das Gehäuse 9 aus elektrisch leitendem Material besteht und mit dem elektrisch leitenden Grundkörper 2 in Kontakt steht. Das Gehäuse 9 und der Grundkörper 2 sind über einen Schirm in Form eines Schirmgeflechts 8.1 des Kabels 8 mit einem Bezugspotential zum Ableiten von elektrischen Aufladungen verbunden. Diese Verbindung ist in den Figuren 2 bis 4 im Detail dargestellt.

In der stirnseitigen Wandung 9.1 des Gehäuses 9 ist eine quer zur Wellenachse A verlaufende Öffnung 10 eingebracht. Um Signalleitungen 8.2 des Kabels 8 ist der metallische Schirm in Form eines Schirmgeflechts 8.1 angeordnet und um das Schirmgeflecht 8.1 befindet sich ein Mantel 8.3 aus Kunststoff. Das Schirmgeflecht 8.1 ist über eine kurze Länge freigelegt und der freigelegte Abschnitt ist über den Außenumfang des Mantels 8.3 nach hinten zurückgeschlagen bzw nach hinten gestülpt. In diesem Zustand wird das Kabel 8 durch die Offnung 10 hindurchführt. Die Lange der Öffnung 10 zur Aufnahme des Kabels 8 ist so gewählt, dass in ihrer Längserstreckung von außen zum Gehäuseinnenraum verlaufend betrachtet diese einen ersten Abschnitt L1 aufweist, in der ein Bereich des Kabels 8 ohne umgeschlagenem Schirmgeflecht 8.1 liegt und einen nachfolgenden zweiten Abschnitt L2 aufweist, in der ein Bereich des Kabels 8 mit umgeschlagenem Schirmgeflecht 8 1 über dem Mantel 8 3 liegt.

Durch eine plastische Verformung, einer Verquetschung bzw eines Eindrückens 11 der Wandung 9.1 des Gehäuses 9 ist in beiden Abschnitten L1, L2 die Öffnung 10 im Durchmesser verringert, wodurch das Kabel 8 in der Öffnung 10 des Gehäuses 9 zugfest durch Formschluss festgelegt ist. Der erste Abschnitt L1 garantiert einen dichten Abschluss, da die Wandung 9.1 des Gehäuses 9 direkt den elastischen Mantel 8.3 des Kabels 8 über den gesamten Umfang kontaktiert und somit die Öffnung 10 sicher abdichtet Der zweite Abschnitt L2 garantiert einen sicheren elektrischen Kontakt des Schirmgeflechts 8.1 mit dem Gehäuse 9 und somit eine Abschirmung des Gehäuses 9 vor elektromagnetischen Störstrahlungen. Eine Beschädigung der Signalleitungen 8.2 wird verhindert, weil die Verformung der Wandung 9.1 in beiden Abschnitten L1, L2 durch plastische Verformung des Mantels 8.3 aufgenommen wird.

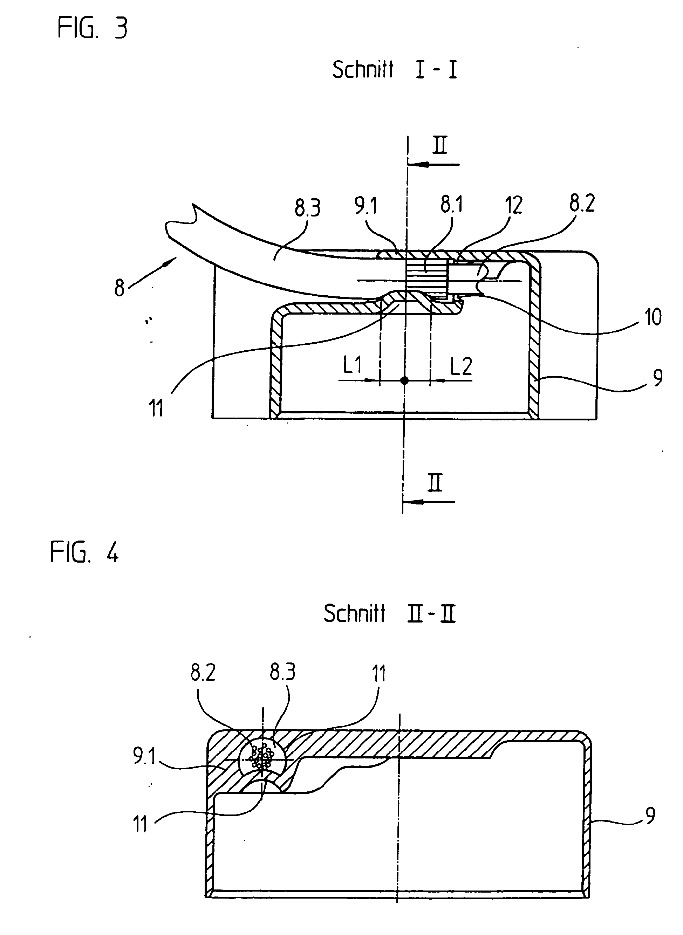

Zur Vereinfachung der Montage und sicheren Positionierung des Kabels 8 in der Öffnung 10 vor der Verformung ist in der Öffnung 10 eine Stufe 12 als Anschlag für das Ende des Mantels 8.3 eingebracht, wie in Figur 3 dargestellt ist.

Wie in den Figuren 3 und 4 weiterhin besonders deutlich ersichtlich, ist die die Öffnung 10 aufweisende stirnseitige Wandung 9.1 dicker ausgeführt als die übrige Wandung des Gehäuses 9. Die Verformung 11 erfolgte einseitig mittels einer halbrunden Form als Sicke um einen guten Materialfluss zu erreichen. Zur Verbesserung des Materialflusses weist die Verformung 11 auch in Längsrichtung der Öffnung 10 am Anfang und Ende jeweils eine Anschrägung auf.

Bei einem Mantelaußendurchmesser des Kabels 8 von etwa 6 mm hat sich eine Länge der Verformung 11 von etwa 9 mm bewährt, wobei der erste Abschnitt L1 eine Länge von etwa 6 mm und der zweite Abschnitt L2 eine Länge von etwa 3 mm aufweist.

Das Gehäuse 9 ist aus elektrisch leitendem Metall, insbesondere Aluminium oder Aluminiumlegierung im Fließpress- oder Druckgussverfahren hergestellt Die Öffnung 10 ist beim Fließpressverfahren eine nachträglich durch spanende Bearbeitung eingebrachte Bohrung und kann beim Druckgussverfahren in der Form vorgesehen werden.

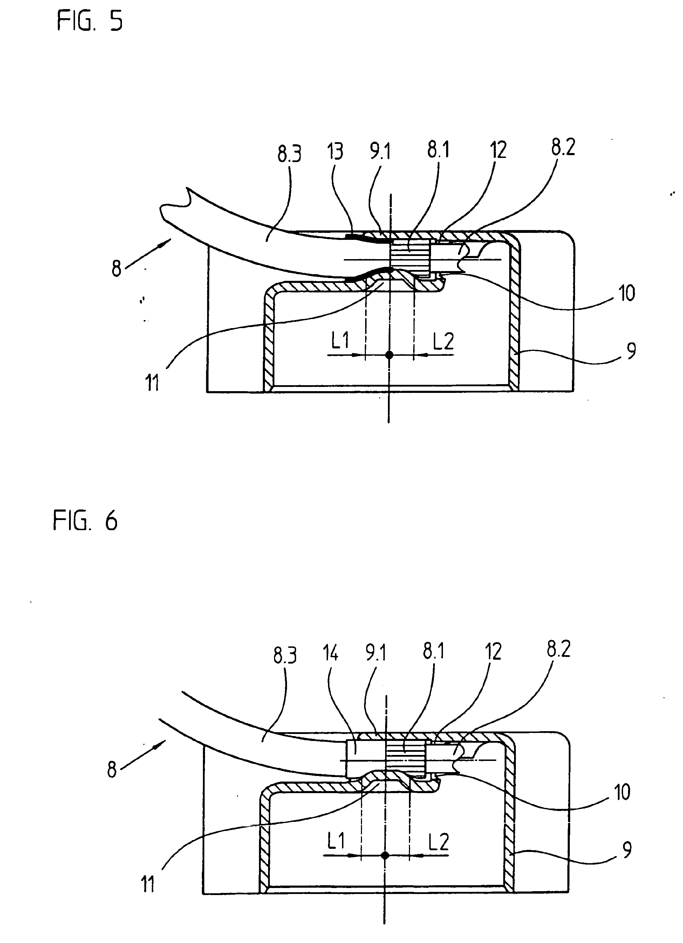

In Figur 5 ist eine abgewandelte Ausführung der Winkelmesseinrichtung dargestellt. Im Unterschied zur ersten Winkelmesseinnchtung gemäß den Figuren 1 bis 4 ist bei dieser zweiten Winkelmesseinrichtung zwischen dem Mantel 8 3 des Kabels 8 und dem Gehäuse 9 zusätzlich ein Klebstoff 13 eingebracht. Dieser Klebstoff 13 ist vorteilhafterweise über den gesamten Umfang des Kabels 8 in der Öffnung 10 vorgesehen und gewährleistet eine noch bessere Abdichtung.

In Figur 6 ist eine weitere Abwandlung der Winkelmesseinrichtung dargestellt. Im Unterschied zur ersten Winkelmesseinrichtung gemäß den Figuren 1 bis 4 ist bei dieser dritten Winkelmesseinrichtung zwischen dem Mantel 8.3 des Kabels 8 und dem Gehäuse 9 eine elastische Zwischenlage 14 beispielsweise in Form eines Gummischlauches vorhanden Diese Zwischenlage 14 ist über den Mantel 8.3 und partiell unter den zurückgeschlagenen Schirm 8.1 geschoben. Der Vorteil einer derartigen Zwischenlage 14 ist, dass eine elastische Verformung durch geeignete Wahl des Materials der Zwischenlage 14 und somit eine gute Dichtigkeit gewährleistet ist. Die Dichtheit ist somit nicht ausschließlich von der Verformbarkeit des Mantels 8.3 des Kabels 8 abhängig.

Bei allen Ausführungsbeispielen kann anstelle des gezeigten radialen Verlaufes des Kabels 10 auch ein axialer Verlauf des Kabels 10 realisiert sein, indem eine Seitenwand des Gehäuses verdickt ausgeführt ist und in dieser Materialverdickung eine axial verlaufende Öffnung zur Aufnahme und Festlegung des Kabels eingebracht ist. Die ausführlich beschriebene und diese alternative Ausführung haben den Vorteil der platzsparenden und den radialen Umfang des Gehäuses nicht vergrößernden Anordnung, was insbesondere zum Einbau der Winkelmesseinnchtung in den rohrformigen Innenraum eines Gehäuses eines Elektromotors vorteilhaft ist.

Das Gehäuse kann auch Bestandteil einer Abtastanordnung einer Langenmesseinrichtung sein. Dabei kann das Gehäuse eine Vorrichtung zur Messwerterfassung in Form einer Detektoranordnung oder nur in Form einer Auswerteeinrichtung zur Verarbeitung von Abtastsignalen einer außerhalb angeordneten Detektoranordnung abdecken

## Patentansprüche

1. Positionsmesseinrichtung mit
- einem Gehäuse (9);
- einer im Gehäuse (9) untergebrachten Vorrichtung (5) zur Messwerterfassung und/oder Messwertverarbeitung und Abgabe eines positionsabhängigen Messsignals über ein einen Schirm (8.1) aufweisendes Kabel (8);
- einer Öffnung (10) in einer Wandung (9.1) des Gehäuses (9), vom Innenraum des Gehäuses (9) nach außen verlaufend, zur Durchführung des Kabels (8), **gekennzeichnet durch**
- eine plastische Verformung der Wandung (11) des Gehäuses (9) zur Festlegung des Kabels (8) in der Öffnung (10) und zur Anbindung des Schirms (8.1) an dem Gehäuse (9), wobei **durch** die plastische Verformung (11) die Öffnung (10) im Durchmesser verringert ist, wodurch das Kabel (8) in der Öffnung (10) des Gehäuses (9) zugfest **durch** Formschluss festgelegt ist.

2. Positionsmesseinrichtung nach Anspruch 1, **dadurch gekennzeichnet, dass** das Kabel (8) Signalleitungen (8.2), den die Signalleitungen (8.2) umgebenden Schirm (8.1) und einen den Schirm (8.1) umgebenden Mantel (8.3) aufweist, wobei der Schirm (8.1) in der Öffnung (10) mit dem Gehäuse (9) in elektrischem Kontakt steht.

3. Positionsmesseinrichtung nach Anspruch 1 oder 2, **dadurch gekennzeichnet, dass** die Verformung (11) in ihrer Längserstreckung von außen in Richtung des Innenraums des Gehäuses (9) verlaufend einen ersten Abschnitt (L1) aufweist, bei dem die Wandung (9.1) des Gehäuses (9) mit dem Schirm (8.1) keinen Kontakt aufweist und danach einen zweiten Abschnitt (L2) aufweist, bei dem die Wandung (9.1) des Gehäuses (9) den Schirm (8.1) kontaktiert.

4. Positionsmesseinrichtung nach Anspruch 3, **dadurch gekennzeichnet, dass** im ersten Abschnitt (L1) die Wandung (9.1) des Gehäuses (9) über den gesamten Umfang direkt den Mantel (8.3) kontaktiert und umschließt.

5. Positionsmesseinrichtung nach Anspruch 3 oder Anspruch 4, **dadurch gekennzeichnet, dass** im zweiten Abschnitt (L2) der Schirm (8.1) über den Mantel (8.3) zurückgeschlagen ist.

6. Positionsmesseinrichtung nach einem der Ansprüche 1 bis 3, **dadurch gekennzeichnet, dass** in der Öffnung (10) zwischen dem Mantel (8.3) und dem Gehäuse (9) ein Klebstoff (13) vorgesehen ist.

7. Positionsmesseinrichtung nach einem der Ansprüche 1 bis 3, **dadurch gekennzeichnet, dass** in der Öffnung (10) zwischen dem Mantel (8.3) und dem Gehäuse (9) eine elastische Zwischenlage (14) vorgesehen ist.

8. Positionsmesseinrichtung nach Anspruch 3, **dadurch gekennzeichnet, dass** in der Öffnung (10) zwischen dem Mantel (8.3) und dem Gehäuse (9) eine elastische Zwischenlage (14) vorgesehen ist, wobei im ersten Abschnitt (L1) die Wandung (9.1) des Gehäuses (9) über den gesamten Umfang direkt die Zwischenlage (14) kontaktiert und umschließt und im zweiten Abschnitt (L2) der Schirm (8.1) über die Zwischenlage (14) zurückgeschlagen ist.

9. Positionsmesseinrichtung nach einem der vorhergehenden Ansprüche, **dadurch gekennzeichnet, dass** das Gehäuse (9) zylinderförmig mit einer stirnseitigen Wandung (9.1) ausgeführt ist und eine zur Winkelmessung dienende Codescheibe (3) und eine die Codescheibe (3) abtastende Detektoreinrichtung (5) enthält.

10. Positionsmesseinrichtung nach Anspruch 9, **dadurch gekennzeichnet, dass** die Öffnung (10) quer zur Längsachse (A) des Gehäuses (9) verläuft und an der stirnseitigen Wandung (9.1) des Gehäuses (9) angeordnet ist.

11. Positionsmesseinrichtung nach Anspruch 10, **dadurch gekennzeichnet, dass** die stirnseitige Wandung (9.1) im Bereich der Öffnung (10) eine Materialverdickung aufweist.

## Claims

1. A position measuring device comprising
- a housing (9);
- a device (5) accommodated in the housing (9) for detecting measured values and/or processing measured values and for delivering a position-dependent measurement signals via a cable (8) encompassing a screen (8.1);
- an opening (10) in a wall (9.1) of the housing (9), running from the interior of the housing (9) towards the outside for the cable (8) feedthrough, **characterized by**
- a plastic deformation of the wall (11) of the housing (9) for fixing the cable (8) in the opening (10) and for attaching the screen (8.1) to the housing (9), wherein the diameter of the opening (10) is reduced by the plastic deformation (11), whereby the cable (8) is fixed in the opening (10) of the housing (9) so as to guarantee tensile strengths in a positive fit.

2. The position measuring device according to claim 1, **characterized in that** the cable (8) encompasses signal lines (8.2), the screen (8.1) surrounding the signal lines (8.2) and a jacket (8.3) surrounding the screen (8.1), wherein the screen (8.1) is in electric contact with the housing (9) in the opening (10).

3. The position measuring device according to claim 1 or 2, **characterized in that** the longitudinal extension of the deformation (11), from the outside running in the direction of the interior of the housing (9), encompasses a first section (L1), where the wall (9.1) of the housing (9) comprising the screen (8.1) does not encompass a contact and thereafter encompasses a second section (L2), where the wall (9.1) of the housing (9) contacts the screen (8.1).

4. The position measuring device according to claim 3, **characterized in that** the wall (9.1) of the housing (9) in the first section (L1) directly contacts and surrounds the jacket (8.3) across the entire periphery.

5. The position measuring device according to claim 3 or 4, **characterized in that** the screen (8.1) is folded back on top of the jacket (8.3) in the second section (L2).

6. The position measuring device according to one of claims 1 to 3, **characterized in that** provision is made for an adhesive (13) in the opening (10) between the jacket (8.3) and the housing (9).

7. The position measuring device according to one of claims 1 to 3, **characterized in that** provision is made for an elastic intermediate layer (14) in the opening (10) between the jacket (8.3) and the housing (9).

8. The position measuring device according to claim 3, **characterized in that** provision is made for an elastic intermediate layer (14) in the opening (10) between the jacket (8.3) and the housing (9), wherein the wall (9.1) of the housing (9) in the first section (L1) directly contacts and surrounds the intermediate layer (14) across the entire periphery and wherein the screen (8:1) is folded back on top of the intermediate layer (14) in the second section (L2).

9. The position measuring device according to one of the preceding claims, **characterized in that** the housing (9) is embodied so as to be cylindrical with a wall (9.1) at the front face and includes a code disk (3), which serves the purpose of angle measurement and a detector device (5), which scans the code disk (3).

10. The position measuring device according to claim 9, **characterized in that** the opening (10) runs at right angles to the longitudinal axis (A) of the housing (9) and is arranged on the wall (9.1) of the housing (9) at the front face.

11. The position measuring device according to claim 10, **characterized in that** the wall (9.1) at the front face encompasses a material thickening in the region of the opening (10).

## Revendications

1. Dispositif de mesure de position, avec
- un boîtier (9);
- un dispositif (5) installé dans le boîtier (9), pour la détection des valeurs mesurées et/ou le traitement des valeurs mesurées et pour la délivrance d'un signal de mesure dépendant de la position, par le biais d'un câble (8) comportant un blindage (8.1);
- un orifice (10) situé dans une paroi (9.1) du boîtier (9), s'étendant depuis l'espace intérieur du boîtier (9) vers l'extérieur, pour le passage du câble (8), **caractérisé par**
- une déformation plastique de la paroi (11) du boîtier (9), pour la fixation du câble (8) dans l'orifice (10) et pour le rattachement du blindage (8.1) au boîtier (9), la déformation plastique de la paroi (11) entraînant une réduction du diamètre de l'orifice (10), permettant ainsi de fixer le câble (8) dans l'orifice (10) du boîtier (9), par complémentarité de forme et de manière à ce qu'il résiste à la traction.

2. Dispositif de mesure de position selon la revendication 1, **caractérisé en ce que** le câble (8) comporte des lignes de signaux (8.2), le blindage (8.1) entourant les lignes de signaux (8.2), ainsi qu'une gaine (8.3) entourant le blindage (8.1), le blindage (8.1) étant électriquement relié au boîtier (9) dans l'orifice (10).

3. Dispositif de mesure de position selon l'une des revendications 1 ou 2, **caractérisé en ce que** la déformation (11) comporte une première section (L1) dans son étendue longitudinale allant de l'extérieur en direction de l'espace intérieur du boîtier (9), section dans laquelle la paroi (9.1) du boîtier (9) n'est pas en contact avec le blindage (8.1), suivie par une deuxième section (L2), dans laquelle la paroi (9.1) du boîtier (9) est en contact avec le blindage (8.1).

4. Dispositif de mesure de position selon la revendication 3, **caractérisé en ce que** dans la première section (L1), la paroi (9.1) du boîtier (9) est directement en contact avec la gaine (8.3) et entoure celle-ci sur l'ensemble de son pourtour.

5. Dispositif de mesure de position selon l'une des revendications 3 ou 4, **caractérisé en ce que** dans la deuxième section (L2), le blindage (8.1) est rabattu sur la gaine (8.3).

6. Dispositif de mesure de position selon l'une des revendications 1 à 3, **caractérisé en ce qu'**une colle (13) est prévue dans l'orifice (10), entre la gaine (8.3) et le boîtier (9).

7. Dispositif de mesure de position selon l'une des revendications 1 à 3, **caractérisé en ce qu'**une couche intermédiaire élastique (14) est prévue dans l'orifice (10), entre la gaine (8.3) et le boîtier (9).

8. Dispositif de mesure selon la revendication 3, **caractérisé en ce qu'**une couche intermédiaire élastique (14) est prévue dans l'orifice (10), entre la gaine (8.3) et le boîtier (9), la paroi (9.1) du boîtier (9) étant directement en contact avec la couche intermédiaire- (14) et entourant celle-ci sur l'ensemble du pourtour dans la première section (L1), et le blindage (8.1) étant rabattu sur la couche intermédiaire (14) dans la deuxième section (L2).

9. Dispositif de mesure selon l'une des revendications précédentes, **caractérisé en ce que** le boîtier (9) est conçu en forme de cylindre avec une paroi (9.1) côté frontal, et contient un codeur à balais (3) destiné à la mesure d'angles, ainsi qu'un dispositif de détection (5) explorant le codeur à balais (3).

10. Dispositif de mesure de position selon la revendication 9, **caractérisé en ce que** l'orifice (10) s'étend perpendiculairement à l'axe longitudinal (A) du boîtier (9), tout en étant disposé sur la paroi (9.1) côté frontal du boîtier (9).

11. Dispositif de mesure de position selon la revendication 10, **caractérisé en ce que** la paroi (9.1) côté frontal comporte un épaississement de matériau dans la région de l'orifice (10).
